# EUROPEAN PATENT APPLICATION

(11) **EP 2 884 755 A1**
(43) Date of publication of application: **17.06.2015**
(21) Application number: 13829379.0
(22) Date of filing: 08.08.2013
(51) Int. Cl.: H04N 21/254

(54) **IPTV PROGRAM SEARCHING METHOD, DEVICE AND SYSTEM**

(30) Priority: 14.08.2012 CN 201210288841
(71) Applicant: ZTE Corporation, Shenzhen, Guangdong 518057 (CN)
(72) Inventor: CAO, Chuandong, Shenzhen Guangdong 518057 (CN); ZHANG, Tao, Shenzhen Guangdong 518057 (CN); YANG, Jingang, Shenzhen Guangdong 518057 (CN); ZHOU, Chunyan, Shenzhen Guangdong 518057 (CN)
(74) Representative: Benson, Christopher
(86) International application number: PCT/CN2013/081115
(87) International publication number: WO 2014/026567

(57) **Abstract**

Provided are an IPTV program search method, device and system, and the method includes: an IPTV search server transmits, to a search template, search results corresponding to part of identifiers of M search results determined according to user search criteria carried in an initial search request; and the IPTV search server transmits, upon reception of a further search request from the search template with respect to said user search criteria, search results corresponding to part or all of identifiers of search results, of which corresponding search results have not been transmitted to the search template, to the search template, until the IPTV search server no longer receives any further search request, or until all of search results corresponding to identifiers of search results matching the user search criteria are already transmitted to the search template..

## Description

### TECHNICAL FIELD

The disclosure relates to the field of Internet Protocol Television (IPTV) techniques, and in particular to an IPTV program search method, device and system.

### BACKGROUD

IPTV (Internet Protocol Television) provides broadband network services that integrating techniques including Internet, multimedia and communications, and it is used to provide, through broadband cable TV networks, household users with various interactive services including digital TV.

At present, with increasing abundance of IPTV program resources, it is complicated and low efficient for a user to search for a desired IPTV program one by one from plenty of IPTV program resources, thus resulting in poor user experiences. In order to solve the problem that it is low efficient for a user to search for a desired IPTV program one by one from plenty of IPTV program resources, below IPTV program search method is used to search for IPTV programs.

An IPTV search server receives search criteria input by a user according to his/her own demand on IPTV programs from a search template, such as a keyword of IPTV program resources, and after reception of the search criteria, the IPTV search server uses a search engine to acquire all search results stored locally that match or correlate to the search criteria, performs service de-duplication processing on the search results, and returns, through the search template, the processed search results to the user, so that the user can select a desired IPTV program according to the returned search results.

When IPTV programs are searched according to the above IPTV program search method, the IPTV search server is desired to return all processed search result matching the user's search criteria to the user so that the user can check and select. When there are only a few users performing the IPTV program search, the IPTV search server can relatively readily provide IPTV search services to corresponding users. However, with increasing development of IPTV techniques, there are more and more IPTV users and IPTV program resources, excessive concurrent searches may arise when a large number of users concurrently initiate IPTV program search requests, in which case the IPTV search server is desired to simultaneously return all search results matching respective search criteria to respective users, and thus volume of data processed concurrently by the IPTV search server tends to be huge, and it may be difficult for the search engine of the IPTV search server to support the huge volume, thereby resulting in a decrease in performance of the search engine and a low search processing efficiency, and reducing search experiences of the user.

### SUMMARY

The embodiment of the disclosure provides an Internet Protocol Television (IPTV) program search method, device and system, which can be used to solve the problem in the prior art that the efficiency of IPTV program search is low when a number of users search programs concurrently.

An IPTV program search method is provided, including:
an IPTV search server determines, upon an initial search request from a search template, identifiers of M search results matching user search criteria carried in the initial search request, and transmits search results corresponding to part of the identifiers of the M search results to the search template, wherein M is a positive integer; and
the IPTV search server transmits, upon reception of a further search request from the search template with respect to said user search criteria, search results corresponding to part or all of identifiers of search results, among the identifiers of the M search results, of which corresponding search results have not been transmitted to the search template, to the search template, until the IPTV search server no longer receives any further search request from the search template with respect to said user search criteria, or until all of search results corresponding to the identifiers of the M search results are already transmitted to the search template.

In an embodiment, no two of search results corresponding to each of identifiers of respective search results transmitted to the search template by the IPTV search server may be identical.

In an embodiment, the step that the IPTV search server transmits search results corresponding to part of the identifiers of the M search results to the search template may include:
the IPTV search server sequences the determined identifiers of the M search results, selects sequentially, starting from a first identifier in the sequence, identifiers of N search results of which no two are identical, and transmits search results corresponding to the selected identifiers of the N search results to the search template, wherein N is a positive integer smaller than M.

In an embodiment, the step that the IPTV search server transmits search results corresponding to part or all of identifiers of search results, among the identifiers of the M search results, of which corresponding search results have not been transmitted to the search template, to the search template may include:
the IPTV search server determines whether there are, among the identifiers of the M search results, no less than N remaining identifiers, of which corresponding search results have not been transmitted to the search template and meet setting criteria, wherein the setting criteria are that search results corresponding to any two identifiers are not identical and search results corresponding to any one identifier are not identical to the search results which have been transmitted to the search template;
if yes, according to the determined sequence of the identifiers of the M search results, the IPTV search server transmits, to the search template, search results corresponding to identifiers of N search results meeting the setting criteria, among the identifiers of the M search results, of which corresponding search results have not been transmitted to the search template; otherwise, the IPTV search server transmits, to the search template, search results corresponding to identifiers of all search results meeting the setting criteria, among the identifiers of the M search results, of which corresponding search results have not been transmitted to the search template.

An IPTV program search device is provided, including: a search module and an execution module,
wherein the search module is configured to determine, upon an initial search request from a search template, identifiers of M search results matching user search criteria carried in the initial search request, wherein M is a positive integer; and
wherein the execution module is configured to: transmit search results corresponding to part of the identifiers of the M search results to the search template, and transmit, upon reception of a further search request from the search template with respect to said user search criteria, search results corresponding to part or all of identifiers of search results, among the identifiers of the M search results, of which corresponding search results have not been transmitted to the search template, to the search template, until the IPTV search server no longer receives any further search request from the search template with respect to said user search criteria, or until all of search results corresponding to the identifiers of the M search results are already transmitted to the search template.

In an embodiment, no two of search results corresponding to each of identifiers of respective search results transmitted to the search template by the execution module may be identical.

In an embodiment, the execution module may be configured to: sequence the determined identifiers of the M search results, select sequentially, starting from a first identifier in the sequence, identifiers of N search results of which no two are identical, and transmit search results corresponding to the selected identifiers of the N search results to the search template, wherein N is a positive integer smaller than M.

In an embodiment, the execution module may be configured to: upon reception of the further search request from the search template with respect to said user search criteria and determining that there are, among the identifiers of the M search results, no less than N remaining identifiers, of which corresponding search results have not been transmitted to the search template and meet setting criteria, according to the determined sequence of the identifiers of the M search results, transmit, to the search template, search results corresponding to identifiers of N search results meeting the setting criteria, among the identifiers of the M search results, of which corresponding search results have not been transmitted to the search template; or
upon reception of the further search request from the search template with respect to said user search criteria and determining that there are, among the identifiers of the M search results, less than N remaining identifiers, of which corresponding search results have not been transmitted to the search template and meet setting criteria, transmit, to the search template, search results corresponding to identifiers of all search results meeting the setting criteria, among the identifiers of the M search results, of which corresponding search results have not been transmitted to the search template, wherein the setting criteria are that search results corresponding to any two identifiers are not identical and search results corresponding to any one identifier are not identical to the search results which have been transmitted to the search template.

An IPTV program search system, including: a search template and an IPTV search server,
wherein the search template is configured to transmit, to the IPTV search server, an initial search request carrying user search criteria and/or a further search request with respect to said user search criteria carried in the initial search request, and receive search results from the IPTV search server upon the initial search request or the further search request; and
wherein the IPTV search server is configured to: determine, upon the initial search request from the search template, identifiers of M search results matching user search criteria carried in the initial search request; transmit search results corresponding to part of the identifiers of the M search results to the search template; and transmit, upon reception of the further search request from the search template with respect to said user search criteria, search results corresponding to part or all of identifiers of search results, among the identifiers of the M search results, of which corresponding search results have not been transmitted to the search template, to the search template, until no further search request from the search template with respect to said user search criteria is received, or until all of search results corresponding to the identifiers of the M search results are already transmitted to the search template, wherein M is a positive integer.

Beneficial effects of the disclosure are as follows.

The embodiment of the disclosure provides an IPTV program search method, device and system, and the method includes: an IPTV search server determines, upon an initial search request from a search template, identifiers of M search results matching user search criteria carried in the initial search request, and transmits search results corresponding to a part of the identifiers of the M search results to the search template, wherein M is a positive integer; and the IPTV search server transmits, upon reception of a further search request from the search template with respect to said user search criteria, search results corresponding to part or all of identifiers of search results, among the identifiers of the M search results, of which corresponding search results have not been transmitted to the search template, to the search template, until the IPTV search server no longer receives any further search request from the search template with respect to said user search criteria, or until all of search results corresponding to the identifiers of the M search results are already transmitted. For each search request, IPTV search server acquires identifiers of search results and returns, to the search template, search results corresponding to a part of identifiers of all search results matching user search criteria carried in the search request, and thus it is possible to reduce volume of data to be processed in the case of excessive concurrent searches and improve search efficiency of the IPTV search server.

### BRIEF DESCRIPTION OF THE DRAWINGS

Fig. 1 is a flow chart of an IPTV program search method according to a first embodiment of the disclosure;
Fig. 2 is a schematic structural diagram of an IPTV program search device according to a second embodiment of the disclosure; and
Fig. 3 is a schematic structural diagram of an IPTV program search system according to a third embodiment of the disclosure.

### DETAILED DESCRIPTION

Embodiments of the disclosure will be further described with reference to accompanying drawings, but the disclosure is not limited to below embodiments.

### Embodiment 1

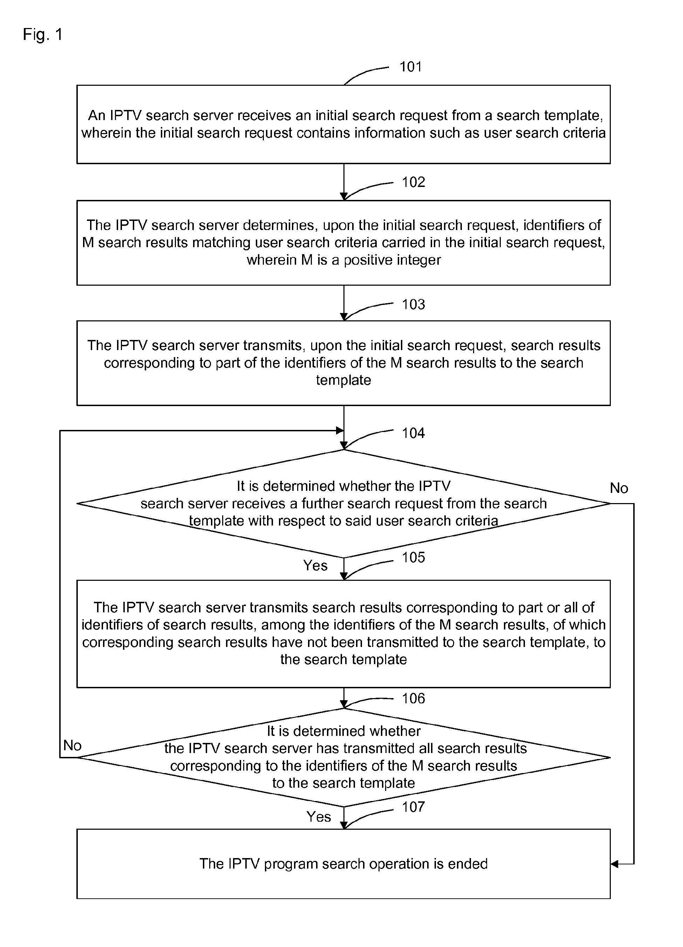

Referring to Fig. 1, which is a flow chart of an IPTV program search method according to a first embodiment of the disclosure, the method includes:
step 101, an IPTV search server receives an initial search request from a search template, wherein the initial search request contains information such as user search criteria.

Specifically, upon reception of the user search criteria (for example information such as a keyword of an IPTV program) input via a user terminal, the search template transmits the initial search request to the IPTV search server through transmitting an initial search request message to the IPTV search server or through other means.

Preferably, besides the user search criteria, the initial search request may further include information regarding the number of search results required by the search request, a start position of the search results corresponding to the the search request and the like.

In an embodiment, the information regarding the number of search results required by the search request may be preset according to practice at the search template, or may be preset based on negotiation between the search template and the IPTV search server, or may also be adjusted as required at any time. The disclosure is not limited in this regard.

Preferably, the search template may be arranged with various components that can be clicked directly when a program is selected via a user terminal, such as menus, buttons, links and the like; the search template may be arranged in an Electronic Program Guide (EPG) server.

The EPG server may be referred to as a portal system of the IPTV, the user search criteria such as a keyword of an IPTV program related to a current demand of the user terminal on IPTV program can be transmitted to the IPTV search server through a direct click, via the user terminal, on the search template arranged in the EPG server (or various menus, buttons or links arranged in the search template). It should be noted that other means can be used, by the user terminal, to transmit the user search criteria to the IPTV search server. The disclosure is not limited in this regard.

Preferably, for the initial search request, the start position of the search results corresponding to the search request, which is carried in the search request, is generally a position where an identifier of a search result sequenced in the first place, among identifiers of search results matching the user search criteria carried in the initial search request, is located.

Step 102, the IPTV search server determines, upon the initial search request, identifiers of M search results matching user search criteria carried in the initial search request, wherein M is a positive integer.

Specifically, in order to avoid the problems that the work load for the IPTV search server to acquire search result entities stored locally that match the user search criteria is huge when a large number of users perform the search concurrently, which may tend to cause performance of the IPTV search server to be reduced, and thereby a low processing efficiency of the IPTV search server, in step 102, the IPTV search server can acquire the user search criteria carried in the initial search request through parsing the initial search request, and determine by using the IPTV local search engine, according to the acquired user search criteria, locally stored identifiers of the M search results matching the user search criteria.

The identifier of the search result is information that can represent uniquely an identity of the search result, and compared to respective search result entities, identifier information of respective search results are fewer in quantity and occupy less storage space, and thus the volume of data to be processed in the case of concurrent searches can be reduced effectively, thereby improving processing efficiency of the IPTV search server.

Specifically, when determining the identifiers of M search results matching the user search criteria, the IPTV search engine is desired to calculate weight values of search results corresponding to the determined identifiers of respective search results according to match degrees between the user search criteria and the search results, as well as popularity of the search results, so as to obtain identifiers of the M search results, which are sequenced in descending order of the weight values of the search results, i.e., an identifier corresponding to a search result having a higher match degree with the user search criteria and/or a higher popularity will be located at a more forward position in the sequence of the identifiers of the M search results. It should be noted that weight coefficients of the match degrees between the user search criteria and the search results, as well as popularity of the search results should be determined according to practice. The disclosure is not limited in this regard.

Preferably, when the IPTV search engine determines the identifiers of M search results matching the user search criteria and has not yet sequenced the identifiers of M search results in a descending order of the weight values of the search results, after acquisition of the identifiers of M search results, the IPTV search server may be further desired to calculate the weight values of search results corresponding to the determined identifiers of respective search results according to match degrees between the user search criteria and the search results, as well as popularity of the search results, and sequence the acquired identifiers of M search results in a descending order of the weight values, so as to obtain sequenced identifiers of M search results.

Specifically, the finally obtained identifiers of M search results are sequenced in a descending order of weight values of search results corresponding to identifiers of respective search results, so that an identifier corresponding to a search result having a higher match degree with the user search criteria and a higher popularity is to be located at a more forward position in the sequence of the identifiers, in this way, when the user terminal selects from search results according to the identifiers of M search results, a desired search result can be acquired more quickly. Accordingly, it is possible to decrease the number of searches and reduce data to be transmitted concurrently, thereby improving efficiency of IPTV program search.

Step 103, the IPTV search server transmits, upon the initial search request, search results corresponding to part of the identifiers of the M search results to the search template.

Specifically, the IPTV search server may select sequentially, starting from an identifier of a search result corresponding to the start position, according to the information regarding the number of search results required by the search request and the start position of the search results corresponding to the the search request, which are carried in the initial search request, identifiers of N search results, wherein the value of N corresponds to the information regarding the number of search results required by the search request, and is a positive integer smaller than M. It should be noted that the information regarding the number of search results required by the search request, which is carried in the initial search request, should be any value smaller than M.

Preferably, the finally obtained identifiers of M search results are sequenced in a descending order of weight values of search results corresponding to identifiers of respective search results, and the start position of the search results corresponding to the search request, which is carried in the search request, is a position where an identifier of a search result sequenced in the first place, among identifiers of search results matching the user search criteria carried in the initial search request, is located. Thus, when transmitting search results corresponding to a part of the identifiers of the M search results to the search template, the IPTV search server can take, according to the determined sequence of the identifiers of the M search results, a first N identifiers of search results among the identifiers of the M search results as identifiers of determined search results desired to be transmitted to the search template, and transmits search results corresponding to the identifiers of the determined N search results to the search template.

Preferably, In IPTV services, one IPTV program may be placed under several different columns, and thus there may be some duplicates in the determined M search results. In order to improve search experiences of the user, when the search results corresponding to a part of the identifiers of the M search results are transmitted to the search template, it is desired to perform de-duplication processing on the search results corresponding to the identifiers of the M search results to ensure that no two search results transmitted to the search template are identical; therefore, when transmitting the search results corresponding to a part of the identifiers of the M search results to the search template, the IPTV search server is desired to select sequentially, starting from an identifier of a search result sequenced in the first place among the identifiers of the M search results, according to the determined sequence of the identifiers of the M search results, identifiers of N search results of which no two are identical, and the IPTV search server is desired to transmits search results corresponding to the selected identifiers of the N search results to the search template, that is to say, selecting sequentially, starting from an identifier of a search result corresponding to the start position, according to the information regarding the number of search results required by the search request and the start position of the search results corresponding to the search request, which are carried in the initial search request, identifiers of N search results of which no two are identical, wherein N corresponds to the information regarding the number of search results required by the search request, and transmitting the search results corresponding to the selected identifiers of the N search results to the search template.

It should be noted that the IPTV search server may also perform de-duplication processing on the search results corresponding to the identifiers of the M search results after determining the identifier of the M search results and before transmitting search results corresponding to part of the determined identifiers of the M search results to the search template, then the IPTV search server may perform once de-duplication processing on search results corresponding to all of the identifier of search results matching the user search criteria, and the processing process is relatively simple.

Preferably, when transmitting, upon the initial search request, the search results corresponding to the identifiers of the N search results of which no two are identical, among the identifiers of the M search results to the search template, the IPTV search server may also transmit, according to the determined sequence of the identifiers of the M search results, an identifier, among the identifiers of the M search results, which is most adjacent to the identifiers of the N search results and of which each of corresponding search results is different from the search results corresponding to the identifiers of the N search results, to the search template, and indicates the search template to take the selected identifier of the search result as a start position of the search results corresponding to the search request carried in a first further search request initiated by the search template with respect to said user search criteria.

Step 104, it is determined whether the IPTV search server receives a further search request from the search template with respect to said user search criteria, if yes, proceed to step 105; otherwise, proceed to step 107.

Specifically, after receiving the search results from the IPTV search server, the search template is desired to show the received search results so as to be provided to the user terminal for check and selection, and the user terminal determines, according to practice, whether it needs to transmit, through the search template, the further search request with respect to said user search criteria carried in the initial search request, to the IPTV search server. For example, when the user terminal determines, according to the search results finally shown by the search template, that it has not obtained its desired IPTV program information, a click on a Next Page button arranged on the search template or other means can be used to notify the search template to transmit the further search request with respect to said user search criteria to the IPTV search server; when the user terminal determines, according to the search results finally shown by the search template, that it has obtained its desired IPTV program information, then no further search is needed.

It should be noted that besides the user search criteria as same as those carried in the initial search request, the further search request may further carry information regarding the number of search results required by the search request and a start position of the search results corresponding to the the search request. Further, the information regarding the number of search results required by the search request, which is carried in the further search request, may be generally as same as that carried in the initial search request, it should be noted that the information regarding the number of search results required by the search request, which is carried in the further search request, may also be set to a value different from that carried in the initial search request, as the disclosure is not limited in this regard.

Further, the start position of the search results corresponding to the search request, which is carried in the further search request, needs to be preset based on negotiation between the search template and the IPTV search server, specifically, when transmitting, upon the initial search request, the search results corresponding to the identifiers of the N search results of which no two are identical, among the identifiers of the M search results, to the search template, the IPTV search server also transmits an identifier, among the identifiers of the M search results, which is most adjacent to the identifiers of the N search results and of which each of corresponding search results is different from the search results corresponding to the identifiers of the N search results, to the search template, then a position where said identifier is located can be taken as a start position of the search results corresponding to the search request carried in a first further search request initiated by the search template with respect to said user search criteria.

Step 105, the IPTV search server transmits search results corresponding to part or all of identifiers of search results, among the identifiers of the M search results, of which corresponding search results have not been transmitted to the search template, to the search template.

It should be noted that after receiving the further search request from the search template with respect to said user search criteria and before transmitting the search results corresponding to part or all of identifiers of search results, among the identifiers of the M search results, of which corresponding search results have not been transmitted to the search template, to the search template, the IPTV search may also re-determine, upon the further search request from the search template, identifiers of M search results matching said user search criteria. For the initial program search request or the further program search request initiated with respect to said user search criteria, the identifiers of the M search results finally obtained by the IPTV search engine are sequenced in a descending order of weight values of search results corresponding to identifiers of respective search results, and thus the content and sequence of the obtained identifiers of the M search results remain unchanged.

Specifically, in step 105, the IPTV search server transmits search results corresponding to part or all of identifiers of search results, among the identifiers of the M search results, of which corresponding search results have not been transmitted to the search template, to the search template, in the following way:
the IPTV search server determines whether there are, among the identifiers of the M search results, no less than N remaining identifiers, of which corresponding search results have not been transmitted to the search template and meet setting criteria, wherein the setting criteria are that search results corresponding to any two identifiers are not identical and search results corresponding to any one identifier are not identical to the search results which have been transmitted to the search template;
if yes, according to the determined sequence of the identifiers of the M search results, the IPTV search server transmits, to the search template, search results corresponding to identifiers of N search results meeting the setting criteria, among the identifiers of the M search results, of which corresponding search results have not been transmitted to the search template; otherwise, the IPTV search server transmits, to the search template, search results corresponding to identifiers of all search results meeting the setting criteria, among the identifiers of the M search results, of which corresponding search results have not been transmitted to the search template.

For example, when among the identifiers of the M search results, identifiers of search results of which corresponding search results have not been transmitted to the search template are a, b, c, d, e, f, g, h, wherein identifiers f and g correspond to a same search result, search results corresponding to other identifiers are different from the search result corresponding to the identifier f, and the search result corresponding to identifier a is as same as one of search results transmitted to the search template, then in the case when the value of N is 5, it can be determined that, among the identifiers of the M search results, the number of identifiers of search results meeting setting criteria (search results corresponding to any two identifiers are not identical and search results corresponding to any one identifier are not identical to the search results which have been transmitted to the search template), among identifiers of search results of which corresponding search results have not been transmitted to the search template, is 6, which is thus no less than N, and therefore the IPTV search server may transmit, according to the sequence of the identifiers of the M search results, search results corresponding to identifiers (b, c, d, e, f) of the N search results meeting the setting criteria, among the identifiers of the M search results, of which corresponding search results have not been transmitted to the search template, to the search template.

For another example, when among the identifiers of the M search results, identifiers of search results of which corresponding search results have not been transmitted to the search template are a, b, c, d, e, f, g, h, wherein identifiers e, f and h correspond to a same search result, search results corresponding to other identifiers are different from the search result corresponding to the identifier e, and the search results corresponding to identifiers a, b and c are as same as search results transmitted to the search template, then in the case when the value of N is 5, it can be determined that, among the identifiers of the M search results, the number of identifiers of search results meeting setting criteria (search results corresponding to any two identifiers are not identical and search results corresponding to any one identifier are not identical to the search results which have been transmitted to the search template), among identifiers of search results of which corresponding search results have not been transmitted to the search template, is 3, which is thus less than N, and therefore the IPTV search server may transmit, search results corresponding to identifiers (d, e, g) of all search results meeting the setting criteria, among the identifiers of the M search results, of which corresponding search results have not been transmitted to the search template, to the search template.

Further, if after determining identifiers of M search results and before transmitting search results corresponding to part or all of the identifiers of the M search results to the search template, the IPTV search server has performed de-duplication processing on search results corresponding to the identifiers of the M search results, then in the step, the IPTV search server transmits search results corresponding to part or all of identifiers of search results, among the identifiers of the M search results, of which corresponding search results have not been transmitted to the search template, to the search template, in the following way:
The IPTV search server determines whether there are, among the identifiers of the M search results, no less than N remaining identifiers, of which corresponding search results have not been transmitted to the search template. If yes, the IPTV search server transmits, to the search template, search results corresponding to identifiers of N search results, among the identifiers of the M search results, of which corresponding search results have not been transmitted to the search template; otherwise, the IPTV search server transmits, to the search template, search results corresponding to identifiers of all search results, among the identifiers of the M search results, of which corresponding search results have not been transmitted to the search template.

Further, when the IPTV search server determines that there are, among the identifiers of the M search results, no less than N remaining identifiers, of which corresponding search results have not been transmitted to the search template and meet setting criteria, and after transmitting, according to the determined sequence of the identifiers of the M search results, the search results corresponding to the identifiers of N search results meeting said user search criteria, among identifiers of which corresponding search results have not been transmitted to the search template and meet setting criteria, among the identifiers of the M search results, to the search template, then the IPTV search server may also transmit, according to the determined sequence of the identifiers of the M search results, an identifier, among the identifiers of the M search results, which is most adjacent to the identifiers of the N search results and of which each of corresponding search results is different from the search results transmitted to the search template, to the search template, and indicate the search template to take the selected identifier of the search result as a start position of the search results corresponding to the search request carried in a next further search request initiated by the search template with respect to said user search criteria.

Further, when the IPTV search server determines that there are, among the identifiers of the M search results, less than N remaining identifiers, of which corresponding search results have not been transmitted to the search template and meet setting criteria, and after transmitting, according to the determined sequence of the identifiers of the M search results, the search results corresponding to the identifiers of all search results meeting said user search criteria, among identifiers of which corresponding search results have not been transmitted to the search template, among the identifiers of the M search results, to the search template, then the IPTV search server may also transmit an ending identifier to the search template, inform the search template that at present the IPTV search server has transmitted search results corresponding to identifiers of all search results meeting the setting criteria to the search template, and indicate the search template not to transmit a further search request with respect to said user search request any more.

It can be learned that if a further search request from the search template with respect to said user search criteria is a X^{th} further search request, when a start position of search results corresponding to the search request, which is carried in the Xth further search request, is a (X-1)^{th} further search request, then a start position of search results corresponding to the search request is carried in a next further search request from the IPTV search server, where X is a positive integer equal to or larger than 2.

Further, when the further search request carries the information regarding the number of search results required by the search request and the start position of the search results corresponding to the search request, then in the step, the IPTV search server may select sequentially, starting from an identifier of a search result corresponding to the start position of the search results corresponding to the search request, which is carried in the further search request, according to the sequence of the identifiers of the M search results, identifiers of N search results meeting setting criteria, wherein N corresponds to the information regarding the number of search results required by the search request, and transmit search results corresponding to the selected identifiers of the N search results to the search template, wherein the setting criteria are that search results corresponding to any two identifiers are not identical and search results corresponding to any one identifier are not identical to the search results which have been transmitted to the search template.

It should be noted that when there are less than N identifiers of search results meeting the setting criteria, starting from the identifier of the search result corresponding to the start position of the search results corresponding to the search request, which is carried in the further search request, to the last identifier of the search result among the identifiers of the M search results, then the IPTV search server is desired to transmit search results corresponding to all of identifiers of search results meeting the setting criteria, starting from the identifier of the search result corresponding to the start position of the search results corresponding to the search request, which is carried in the further search request, to the last identifier of the search result among the identifiers of the M search results, to the search template.

Step 106, it is determined whether the IPTV search server has transmitted all search results corresponding to the identifiers of the M search results to the search template, if yes, proceed to step 107; otherwise, return to step 104.

It should be noted that in step 106, when each of search results corresponding to identifiers of search results that have not been transmitted to the search template already exists in the search results corresponding to the identifiers of the search results transmitted to the search template, then it can be considered that all of the search results corresponding to the identifiers of the M search results have already been transmitted to the search template.

Step 107, the IPTV program search operation is ended.

In the IPTV program search method according to the first embodiment of the disclosure, upon each search request, the IPTV search server acquires identifiers of search results matching user search criteria rather than search result entities, and the IPTV search server returns search results corresponding to part of all identifiers of the search results matching said user search criteria carried in the initial search request to the search template, and thus it is possible to reduce volume of data to be processed in the case of excessive concurrent searches, avoid a decrease in performance of the IPTV search server and improve search efficiency of the IPTV search server; moreover, in the first embodiment of the disclosure, an identifier of a search result having a higher match degree with the user search criteria and a higher popularity is located at a more forward position in the sequence, and thus the user is enabled to acquire more quickly his/her desired IPTV program information, so it is possible to decrease the number of searches, thereby improving search experiences of the user and further improving the search efficiency of the IPTV search server.

### Embodiment 2

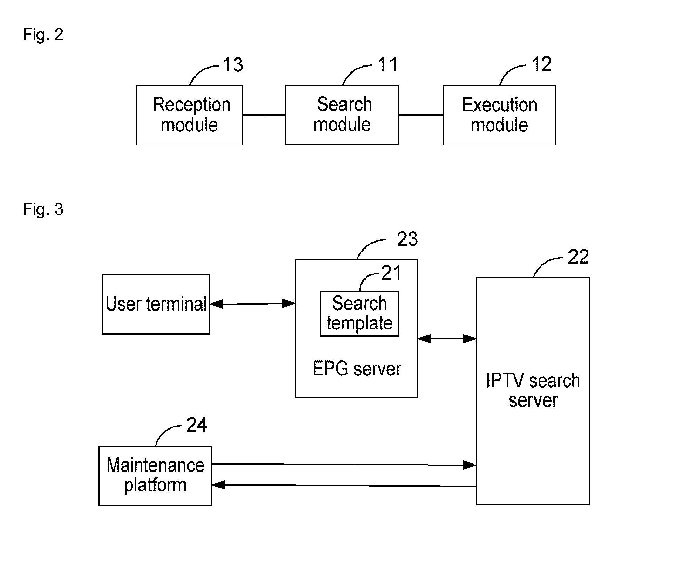

Referring to Fig. 2, which is a schematic structural diagram of an IPTV program search device according to a second embodiment of the disclosure, the IPTV program search device includes a search module 11, an execution module 12 and a reception module 13.

The reception module 13 is configured to receive, from a search template, an initial search request carrying user search criteria and/or a further search request from the search template with respect to said user search criteria carried in the initial search request; specifically, besides said user search criteria, the initial search request may further carry information regarding the number of search results required by the search request and a start position of the search results corresponding to the the search request, in addition, the further search request may also carry said user search criteria, the information regarding the number of search results required by the search request and the start position of the search results corresponding to the the search request.

The search module 11 is configured to determine, upon an initial search request from a search template, identifiers of M search results matching user search criteria carried in the initial search request, wherein M is a positive integer.

Specifically, the search module 11 is configured to acquire the user search criteria carried in the initial search request through parsing the initial search request, and determine by using the IPTV local search engine, according to the acquired user search criteria, locally stored identifiers of the M search results matching the user search criteria.

Preferably, the identifiers of the M search results determined by the search module 11 are sequenced in a descending order of weight values of search results corresponding to identifiers of respective search results

In an embodiment, the weight values of the search results can be calculated through weighing according to match degrees between the user search criteria and search results, as well as popularity of the search results; it should be noted that weight coefficients of the match degrees between the user search criteria and the search results, as well as popularity of the search results should be determined according to practice, as the disclosure is not limited in this regard.

The execution module 12 is configured to: transmit search results corresponding to part of the identifiers of the M search results to the search template, and transmit, upon reception of a further search request from the search template with respect to said user search criteria, search results corresponding to part or all of identifiers of search results, among the identifiers of the M search results, of which corresponding search results have not been transmitted to the search template, to the search template, until the IPTV search server no longer receives any further search request from the search template with respect to said user search criteria, or until all of search results corresponding to the identifiers of the M search results have already been transmitted to the search template.

It should be noted that no two of search results corresponding to identifiers of respective search results transmitted by the execution module 12 to the search template are identical, that is to say, before transmitting the search results corresponding to the identifiers of the respective search results, the execution module 12 has performed de-duplication processing on the search results corresponding to the identifiers of the respective search results.

Specifically, the execution module 12 is configured to: sequence the determined identifiers of the M search results, select sequentially, starting from a first identifier in the sequence, identifiers of N search results of which no two are identical, and transmit search results corresponding to the selected identifiers of the N search results to the search template, wherein N is a positive integer smaller than M.

Specifically, when the initial search request carries information regarding the number of search results required by the search request and a start position of the search results corresponding to the search request, the execution module 12 may select sequentially, starting from an identifier of a search result corresponding to the start position, according to the information regarding the number of search results required by the search request and the start position of the search results corresponding to the the search request, which are carried in the initial search request, identifiers of N search results of which no two are identical, wherein N corresponds to the information regarding the number of search results required by the search request, and transmit search results corresponding to the selected identifiers of the N search results to the search template.

Preferably, the search module 11 may be configured to, after receiving the further search request from the search template with respect to said user search criteria and before transmitting the search results corresponding to part or all of identifiers of search results, among the identifiers of the M search results, of which corresponding search results have not been transmitted to the search template, to the search template, re-determine, upon the further search request, identifiers of M search results matching said user search criteria, that is to say, the search module 11 may perform, upon reception of each search request, an operation for determining identifiers of respective search results matching said user search criteria carried in the search request.

The execution module 12 is configured to: upon reception of the further search request from the search template with respect to said user search criteria and determining that there are, among the identifiers of the M search results, no less than N remaining identifiers, of which corresponding search results have not been transmitted to the search template and meet setting criteria, according to the determined sequence of the identifiers of the M search results, transmit, to the search template, search results corresponding to identifiers of N search results meeting the setting criteria, among the identifiers of the M search results, of which corresponding search results have not been transmitted to the search template; or, upon reception of the further search request from the search template with respect to said user search criteria and determining that there are, among the identifiers of the M search results, less than N remaining identifiers, of which corresponding search results have not been transmitted to the search template and meet setting criteria, transmit, to the search template, search results corresponding to identifiers of all search results meeting the setting criteria, among the identifiers of the M search results, of which corresponding search results have not been transmitted to the search template, wherein the setting criteria are that search results corresponding to any two identifiers are not identical and search results corresponding to any one identifier are not identical to the search results which have been transmitted to the search template.

Preferably, when the execution module 12 determines that there are, among the identifiers of the M search results, no less than N remaining identifiers, of which corresponding search results have not been transmitted to the search template and meet setting criteria, and after transmitting, according to the determined sequence of the identifiers of the M search results, the search results corresponding to the identifiers of N search results meeting said user search criteria, among identifiers of which corresponding search results have not been transmitted to the search template and meet setting criteria, among the identifiers of the M search results, to the search template, then the IPTV search server may also transmit, according to the determined sequence of the identifiers of the M search results, an identifier, among the identifiers of the M search results, which is most adjacent to the identifiers of the N search results and of which each of corresponding search results is different from the search results transmitted to the search template, to the search template, and indicate the search template to take the selected identifier of the search result as a start position of the search results corresponding to the search request carried in a next further search request initiated by the search template with respect to said user search criteria.

Preferably, when the execution module 12 determines that there are, among the identifiers of the M search results, less than N remaining identifiers, of which corresponding search results have not been transmitted to the search template and meet setting criteria, and after transmitting, according to the determined sequence of the identifiers of the M search results, the search results corresponding to the identifiers of all search results meeting said user search criteria, among identifiers of which corresponding search results have not been transmitted to the search template, among the identifiers of the M search results, to the search template, then the IPTV search server may also transmit an ending identifier to the search template, inform the search template that at present search results corresponding to identifiers of all search results meeting the setting criteria have already been transmitted to the search template, and indicate the search template not to transmit a further search request with respect to said user search request any more.

It should be noted that if a further search request from the search template with respect to said user search criteria is a X^{th} further search request, when a start position of search results corresponding to the search request, which is carried in the Xth further search request, is a (X-1)^{th} further search request, then a start position of search results corresponding to the search request is carried in a next further search request from the IPTV search server, where X is a positive integer equal to or larger than 2.

Preferably, when the further search request carries the information regarding the number of search results required by the search request and the start position of the search results corresponding to the search request, then in the step, then the execution module 12 may select sequentially, starting from an identifier of a search result corresponding to the start position of the search results corresponding to the search request, which is carried in the further search request, according to the sequence of the identifiers of the M search results, identifiers of N search results meeting setting criteria, wherein N corresponds to the information regarding the number of search results required by the search request, and transmit search results corresponding to the selected identifiers of the N search results to the search template, wherein the setting criteria are that search results corresponding to any two identifiers are not identical and search results corresponding to any one identifier are not identical to the search results which have been transmitted to the search template.

Preferably, when there are less than N identifiers of search results meeting the setting criteria, starting from the identifier of the search result corresponding to the start position of the search results corresponding to the search request, which is carried in the further search request, to the last identifier of the search result among the identifiers of the M search results, then the execution module 12 is desired to transmit search results corresponding to all of identifiers of search results meeting the setting criteria, starting from the identifier of the search result corresponding to the start position of the search results corresponding to the search request, which is carried in the further search request, to the last identifier of the search result among the identifiers of the M search results, to the search template.

### Embodiment 3

Referring to Fig. 3, which is a schematic structural diagram of an IPTV program search system according to a third embodiment of the disclosure, the IPTV program search system includes a search template 21 and an IPTV search server 22.

The search template 21, which can be arranged in the EPG server 23, is configured to transmit, to the IPTV search server, an initial search request carrying user search criteria and/or a further search request with respect to said user search request carried in the initial search request, and receive search results from the IPTV search server 22 upon the initial search request and/or the further search request; specifically, the search template 21 is configured to, upon reception of the user search criteria (for example information such as a keyword of an IPTV program) input via a user terminal, transmit the initial search request to the IPTV search server 22 through transmitting an initial search request message to the IPTV search server 22 or through other means, and transmit the further search request to the IPTV search server 22 through transmitting a search response success message to the IPTV search server 22 or through other means.

Specifically, besides said user search criteria, the initial search request may further carry information regarding the number of search results required by the search request and a start position of the search results corresponding to the the search request, in addition, the further search request may also carry said user search criteria, the information regarding the number of search results required by the search request and the start position of the search results corresponding to the the search request.

The IPTV search server 22 is configured to: determine, upon the initial search request from the search template 21, identifiers of M search results matching user search criteria carried in the initial search request; transmit search results corresponding to part of the identifiers of the M search results to the search template 21; and transmit, upon reception of the further search request from the search template 21 with respect to said user search criteria, search results corresponding to part or all of identifiers of search results, among the identifiers of the M search results, of which corresponding search results have not been transmitted to the search template 21, to the search template 21, until no further search request from the search template 21 with respect to said user search criteria is received, or until all of search results corresponding to the identifiers of the M search results are already transmitted to the search template 21, wherein M is a positive integer.

Specifically, no two of search results corresponding to each of identifiers of respective search results transmitted to the search template 21 by the IPTV search server 22 are identical.

Specifically, the IPTV search server 22 is configured to acquire the user search criteria carried in the initial search request through parsing the initial search request, and determine by using the IPTV local search engine, according to the acquired user search criteria, locally stored identifiers of the M search results matching the user search criteria. Further, the identifiers of the M search results determined by the IPTV search server 22 are sequenced in a descending order of weight values of search results corresponding to identifiers of respective search results In an embodiment, the weight values of the search results can be calculated through weighing according to match degrees beteen the user search criteria and search results, as well as popularity of the search results; it should be noted that weight coefficients of the match degrees between the user search criteria and the search results, as well as popularity of the search results need to be determined according to practice, as the disclosure is not limited in this regard.

Specifically, the IPTV search server 22 is configured to: sequence the determined identifiers of the M search results, select sequentially, starting from a first identifier in the sequence, identifiers of N search results of which no two are identical, and transmit search results corresponding to the selected identifiers of the N search results to the search template 21, wherein N is a positive integer smaller than M. Specifically, when the initial search request carries information regarding the number of search results required by the search request and a start position of the search results corresponding to the search request, then the IPTV search server 22 may select sequentially, starting from an identifier of a search result corresponding to the start position, according to the information regarding the number of search results required by the search request and the start position of the search results corresponding to the search request, which are carried in the initial search request, identifiers of N search results of which no two are identical, wherein N corresponds to the information regarding the number of search results required by the search request, and transmit search results corresponding to the selected identifiers of the N search results to the search template 21.

Preferably, the IPTV search server 22 may be configured to, after receiving the further search request from the search template 21 with respect to said user search criteria and before transmitting the search results corresponding to part or all of identifiers of search results, among the identifiers of the M search results, of which corresponding search results have not been transmitted to the search template, to the search template 21, re-determine, upon the further search request, identifiers of M search results matching said user search criteria, that is to say, the IPTV search server 22 may perform, upon reception of each search request, an operation for determining identifiers of respective search results matching said user search criteria carried in the search request.

Preferably, the IPTV search server 22 may be configured to: upon reception of the further search request from the search template 21 with respect to said user search criteria and determining that there are, among the identifiers of the M search results, no less than N remaining identifiers, of which corresponding search results have not been transmitted to the search template 21 and meet setting criteria, according to the determined sequence of the identifiers of the M search results, transmit, to the search template 21, search results corresponding to identifiers of N search results meeting the setting criteria, among the identifiers of the M search results, of which corresponding search results have not been transmitted to the search template 21; or, upon reception of the further search request from the search template 21 with respect to said user search criteria and determining that there are, among the identifiers of the M search results, less than N remaining identifiers, of which corresponding search results have not been transmitted to the search template 21 and meet setting criteria, transmit, to the search template 21, search results corresponding to identifiers of all search results meeting the setting criteria, among the identifiers of the M search results, of which corresponding search results have not been transmitted to the search template 21, wherein the setting criteria are that search results corresponding to any two identifiers are not identical and search results corresponding to any one identifier are not identical to the search results which have been transmitted to the search template 21.

It should be noted that the IPTV program search system may further include a maintenance platform 24, which is configured to perform maintenance operations such as parameter configuration and interface testing on search template 21, the EPG server 23 or the IPTV search server 22, and manage information such as IPTV program data.

It is apparent that various changes and variations can be made by those skilled in the art without departing from the spirit and scope of the disclosure. In this way, if these modifications and variations fall within the scope of the claims and equivalent techniques, the disclosure is intended to include these changes and variations.

### INDUSTRIAL APPLICABILITY

The embodiment of the disclosure provides an IPTV program search method, device and system, search results acquired according to user search criteria carried in an initial search request from a search template are transmitted to the search template; upon reception of a further search request from the search template with respect to said user search criteria, corresponding search results are transmitted to the search template until no further search request is received from the search template. In this way, it is possible to reduce volume of data to be processed in case of excessive concurrent searches and improve search efficiency of the IPTV search server.

## Claims

1. An Internet Protocol Television (IPTV) program search method, comprising:
determining, by an IPTV search server, upon an initial search request from a search template, identifiers of M search results matching user search criteria carried in the initial search request, and transmitting search results corresponding to part of the identifiers of the M search results to the search template, wherein M is a positive integer; and
transmitting, by the IPTV search server, upon reception of a further search request from the search template with respect to said user search criteria, search results corresponding to part or all of identifiers of search results, among the identifiers of the M search results, of which corresponding search results have not been transmitted to the search template, to the search template, until the IPTV search server no longer receives any further search request from the search template with respect to said user search criteria, or until all of search results corresponding to the identifiers of the M search results are already transmitted to the search template.

2. The IPTV program search method according to claim 1, wherein no two of search results corresponding to each of identifiers of respective search results transmitted to the search template by the IPTV search server are identical.

3. The IPTV program search method according to claim 2, wherein the transmitting, by the IPTV search server, search results corresponding to part of the identifiers of the M search results to the search template comprises:
sequencing, by the IPTV search server, the determined identifiers of the M search results, selecting sequentially, starting from a first identifier in the sequence, identifiers of N search results of which no two are identical, and transmitting search results corresponding to the selected identifiers of the N search results to the search template, wherein N is a positive integer smaller than M.

4. The IPTV program search method according to claim 3, wherein the transmitting, by the IPTV search server, search results corresponding to part or all of identifiers of search results, among the identifiers of the M search results, of which corresponding search results have not been transmitted to the search template, to the search template comprises:
determining, by the IPTV search server, whether there are, among the identifiers of the M search results, no less than N remaining identifiers, of which corresponding search results have not been transmitted to the search template and meet setting criteria, wherein the setting criteria are that search results corresponding to any two identifiers are not identical and search results corresponding to any one identifier are not identical to the search results which have been transmitted to the search template;
if yes, according to the determined sequence of the identifiers of the M search results, transmitting, to the search template, search results corresponding to identifiers of N search results meeting the setting criteria, among the identifiers of the M search results, of which corresponding search results have not been transmitted to the search template; otherwise, transmitting, to the search template, search results corresponding to identifiers of all search results meeting the setting criteria, among the identifiers of the M search results, of which corresponding search results have not been transmitted to the search template.

5. An Internet Protocol Television (IPTV) program search device, comprising: a search module and an execution module,
wherein the search module is configured to determine, upon an initial search request from a search template, identifiers of M search results matching user search criteria carried in the initial search request, wherein M is a positive integer; and
wherein the execution module is configured to: transmit search results corresponding to part of the identifiers of the M search results to the search template, and transmit, upon reception of a further search request from the search template with respect to said user search criteria, search results corresponding to part or all of identifiers of search results, among the identifiers of the M search results, of which corresponding search results have not been transmitted to the search template, to the search template, until the IPTV search server no longer receives any further search request from the search template with respect to said user search criteria, or until all of search results corresponding to the identifiers of the M search results are already transmitted to the search template.

6. The IPTV program search device according to claim 5, wherein no two of search results corresponding to each of identifiers of respective search results transmitted to the search template by the execution module are identical.

7. The IPTV program search device according to claim 6, wherein the execution module is configured to: sequence the determined identifiers of the M search results, select sequentially, starting from a first identifier in the sequence, identifiers of N search results of which no two are identical, and transmit search results corresponding to the selected identifiers of the N search results to the search template, wherein N is a positive integer smaller than M.

8. The IPTV program search device according to claim 7,
wherein the execution module is configured to: upon reception of the further search request from the search template with respect to said user search criteria and determining that there are, among the identifiers of the M search results, no less than N remaining identifiers, of which corresponding search results have not been transmitted to the search template and meet setting criteria, according to the determined sequence of the identifiers of the M search results, transmit, to the search template, search results corresponding to identifiers of N search results meeting the setting criteria, among the identifiers of the M search results, of which corresponding search results have not been transmitted to the search template; or
upon reception of the further search request from the search template with respect to said user search criteria and determining that there are, among the identifiers of the M search results, less than N remaining identifiers, of which corresponding search results have not been transmitted to the search template and meet setting criteria, transmit, to the search template, search results corresponding to identifiers of all search results meeting the setting criteria, among the identifiers of the M search results, of which corresponding search results have not been transmitted to the search template, wherein the setting criteria are that search results corresponding to any two identifiers are not identical and search results corresponding to any one identifier are not identical to the search results which have been transmitted to the search template.

9. An Internet Protocol Television (IPTV) program search system, comprising: a search template and an IPTV search server,
wherein the search template is configured to transmit, to the IPTV search server, an initial search request carrying user search criteria and/or a further search request with respect to said user search criteria carried in the initial search request, and receive search results from the IPTV search server upon the initial search request or the further search request; and
wherein the IPTV search server is configured to: determine, upon the initial search request from the search template, identifiers of M search results matching user search criteria carried in the initial search request; transmit search results corresponding to part of the identifiers of the M search results to the search template; and transmit, upon reception of the further search request from the search template with respect to said user search criteria, search results corresponding to part or all of identifiers of search results, among the identifiers of the M search results, of which corresponding search results have not been transmitted to the search template, to the search template, until no further search request from the search template with respect to said user search criteria is received, or until all of search results corresponding to the identifiers of the M search results are already transmitted to the search template, wherein M is a positive integer.

10. The IPTV program search system according to claim 9, wherein no two of search results corresponding to each of identifiers of respective search results transmitted to the search template by the IPTV search server are identical.
